Europäisches Patentamt

European Patent Office

Office européen des brevets

(19)

(11) Numéro de publication : **0 204 790**
**B1**

(12) **FASCICULE DE BREVET EUROPÉEN**

(45) Date de publication du fascicule du brevet :
07.09.88

(51) Int. Cl.⁴ : **C 08 L 23/16, C 08 L 23/08**

(21) Numéro de dépôt : **86900158.6**

(22) Date de dépôt : **12.12.85**

(86) Numéro de dépôt international :
**PCT/FR 85/00362**

(87) Numéro de publication internationale :
**WO/8603761 (03.07.86 Gazette 86/14)**

(54) COMPOSITIONS A BASE D'ELASTOMERE POLYOLEFINIQUE, LEUR PROCEDE DE FABRICATION ET DES ARTICLES OBTENUS A PARTIR DESDITES COMPOSITIONS.

(30) Priorité : **14.12.84 FR 8419113**

(43) Date de publication de la demande :
**17.12.86 Bulletin 86/51**

(45) Mention de la délivrance du brevet :
**07.09.88 Bulletin 88/36**

(84) Etats contractants désignés :
**AT BE CH DE FR GB IT LI LU NL SE**

(56) Documents cités :
**DE-A- 2 324 987**
**FR-A- 1 491 940**
**US-A- 3 454 676**

(73) Titulaire : **NORSOLOR S.A.**
**Tour Aurore Place des Reflets**
**F-92080 Paris la Defense Cédex 5 (FR)**

(72) Inventeur : **HEILBRUNN, Alain**
**9, rue Gustave Flaubert**
**F-75017 Paris (FR)**

(74) Mandataire : **Dubost, Thierry Pierre**
**NORSOLOR Service Propriété Industrielle Tour**
**Aurore Place des Reflets Cédex 5**
**F-92080 PARIS LA DEFENSE 2 (FR)**

Jouve, 18, rue St-Denis, 75001 Paris, France

EP 0 204 790 B1

**Description**

La présente invention concerne des compositions à base d'élastomère polyoléfinique, leur procédé de fabrication et des articles obtenus par transformation desdistes compositions.

Les élastomères polyoléfiniques, en particulier les polymères statistiques éthylène-propylène-diène, sont des caoutchoucs très utilisés dans l'industrie. En vue de leur transformation par des techniques d'extrusion et de moulage, il est nécessaire de pouvoir disposer de compositions ayant une dureté très élevée. De telles compositions doivent néanmoins conserver un comportement d'élastomère et non acquérir celui d'un thermoplastique. Les compositions doivent de ce fait non seulement être réticulables mais encore avoir une bonne processabilité, c'est-à-dire être transformables suivant les techniques de transformation du caoutchouc et avec des machines utilisées dans cette profession ; en particulier la température de transformation doit impérativement rester au plus égale à 110 °C après incorporation des agents réticulants.

L'addition d'agents de renforcement classiques, tels que le noir carbone, le kaolin ou la silice, aux élastomères polyoléfiniques ne permet pas à elle seule d'atteindre une dureté satisfaisante à cet égard.

Par ailleurs, il est connu d'ajouter aux élastomères polyoléfiniques des résines styréniques (brevet français n° 1.337.598) ou bien des agents phénoliques (brevet allemand n° 2.324.987) afin d'augmenter leur dureté. Cependant de telles compositions ne sont pas entièrement satisfaisantes, étant donné que leur reprise élastique après déformation à 20 °C n'est pas très bonne et surtout qu'elles présentent une très importante instabilité dimensionnelle à l'usage.

On connaît par le brevet français n° 1.491.940 un mélange destiné à la fabrication de balles de golf, comprenant de 5 à 95 % en poids d'un caoutchouc synthétique choisi parmi le polybutadiène, le polychloroprène, le polyisoprène, les polymères acrylonitrile-butadiène-styrène, les polymères séquencés styrène-butadiène-styrène et les copolymères éthylène-propylène et de 95 à 5 % en poids d'un copolymère d'oléfine et d'acide carboxylique insaturé. On connaît également par le brevet américain n° 3.454.676 un mélange constitué de 20 à 80 % en poids d'un élastomère éthylène-propylène-hexadiène-1,4 et de 80 à 20 % en poids d'un copolymère ionique à base d'éthylène contenant de 1 à 25 % en moles de motifs dérivés d'un acide mono- ou dicarboxylique éthyléniquement $\alpha$, $\beta$ insaturé, dont au moins 30 % des groupes acides sont neutralisés par des ions métalliques. En l'absence de charge telle que le noir de carbone et en l'absence d'agent de vulcanisation tel que le soufre, ce dernier mélange présente une médiocre résistance à la rupture, comprise entre 22 et 100 kg/cm².

Un but de la présente invention et donc de fournir des compositions à base d'élastomère polyoléfinique insaturé qui, tout en ayant une dureté Shore A au moins égale à 80, présentent une excellente stabilité dimensionnelle à l'usage, une bonne adhérence sur des métaux tels que l'acier et un rebond Zwick d'un niveau satisfaisant.

Les compositions constituant le premier objet de la présente invention comprennent au moins un élastomère polyoléfinique insaturé, au moins un agent de vulcanisation et au moins un activateur de vulcanisation dudit élastomère et sont caractérisées en ce qu'elles comprennent en outre au moins un terpolymère (A) comprenant des motifs dérivés de l'éthylène, des motifs dérivés de l'anhydride maléique et des motifs dérivés d'au moins un ester de l'acide acrylique ou méthacrylique.

Par élastomère polyoléfinique insaturé au sens de la présente invention on entend de préférence un terpolymère (B) d'éthylène avec au moins une $\alpha$-oléfine ayant de 3 à 6 atomes de carbone et au moins une diène. Plus particulièrement on préfère les terpolymères d'éthylène-propylène, le diène étant choisi parmi les diènes linéaires ou cycliques, conjugués ou non conjugués comme par exemple le butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-(5-hexényl)-2-nor-bornène, le 1,5-cyclooctadiène, le bicyclo 2,2,2 octa-2,5-diène, le cyclopentadiène, le 4,7,8,9-tétrahydroindène et l'isopropylidène tétrahydroindène. De tels terpolymères élastomériques (B) utilisables conformément à la présente invention comprennent en général entre 15 % et 60 % en moles de motifs dérivés du propylène et entre 0,1 % et 20 % en moles de motifs dérivés du diène.

Par agent de vulcanisation de l'élastomère au sens de la présente invention, on entend notamment le soufre et des dérivés soufrés organiques.

Par activateur de vulcanisation au sens de la présente invention on entend des composés utilisés en combinaison avec l'agent de vulcanisation tels que notamment les dithiocarbamates de zinc et de tellure, les alkyl benzothiazylsulfonamides et les sulfures d'alkylthiurame.

Parmi les terpolymères (A) entrant en outre dans les compositions selon l'invention on préfère des terpolymères comprenant :

— de 87 à 98,7 % en moles de motifs dérivés de l'éthylène,

— de 1 à 10 % en moles de motifs dérivés d'un ester choisi parmi les acrylates et méthacrylates d'alkyle, ledit groupe alkyle ayant de 1 à 6 atomes de carbone, et

— de 0,3 à 3 % en moles de motifs dérivés de l'anhydride maléique, et ayant un indice de fluidité (mesuré selon la norme ASTM-D 1238) compris entre 3 et 200 dg/min. De tels polymères ont été décrits dans le brevet français n° 2.498.609. Ils sont utilisés en quantité comprise entre 15 % et 60 % en poids par rapport au poids de la phase polymère, celle-ci étant constituée du mélange de l'élastomère polyoléfini-

2

que insaturé et du terpolymère (A).

La proportion du terpolymère (A) dans la phase polymère sera choisie, selon l'utilisation envisagée pour la composition, en fonction du compromis souhaité entre :

— d'une part la dureté Shore, le rebond Zwick et l'adhérence sur métaux, toutes propriétés dont le niveau est d'autant meilleur que la proportion du terpolymère (A) est plus élevée, et

— d'autre part les propriétés dynamométriques (résistance et allongement à la rupture, déformation rémanente à la compression) dont le niveau est abaissé lorsque la proportion du terpolymère (A) augmente.

Les compositions selon l'invention peuvent en outre comprendre au moins une charge renforçante telle que notamment le noir de carbone, le kaolin ou le silice en quantité de préférence comprise entre 10 % et 120 % en poids par rapport au poids de la phase polymère. Les compositions selon l'invention peuvent aussi en outre comprendre au moins un pigment organique et/ou au moins une charge minérale en quantité de préférence au plus égale à 5 % en poids par rapport au poids de la phase polymère. De telles charges minérales comprennent notamment les oxydes de titane, de plomb, de fer, d'étain et de zinc, les sulfates de baryum et de plomb, les carbonates de magnésium, de calcium et de plomb, les pyrites, etc.

Les compositions selon l'invention peuvent en outre comprendre au moins une résine synthétique renforçante telle que notamment une résine butadiène-styrène et/ou en quantité au plus égale à 25 % en poids par rapport au poids de la phase polymère telle que définie précédemment.

Les compositions selon l'invention peuvent en outre comprendre au moins un plastifiant de l'élastomère polyoléfinique insaturé, en quantité au plus égale à 30 % en poids par rapport au poids de la phase polymère.

Un second objet de la présente invention consiste en un procédé de fabrication des compositions décrites précédemment, caractérisé en ce que l'élastomère polyoléfinique insaturé, l'agent de vulcanisation, l'activateur de vulcanisation et le terpolymère sont mélangés à une température comprise entre 70 % et 150 % pendant une durée suffisante pour obtenir l'homogénéisation du mélange, c'est-à-dire généralement comprise entre 2 et 10 minutes selon les moyens mis en œuvre. Les autres constituants éventuellement présents dans la composition, à savoir la charge renforçante, le pigment organique, la charge minérale, la résine synthétique renforçante, le plastifiant de l'élastomère, peuvent être mélangés dans les mêmes conditions. Pour la mise en œuvre du procédé selon l'invention, on utilise tout dispositif adapté au mélangeage de compositions élastomériques, telle que notamment un mélangeur interne à cylindres ou à rotors.

Les compositions obtenues à ce stade, c'est-à-dire sans que leur température ait dépassé 150 °C, sont aptes au stockage et au transport. Toutefois en vue de leur transformation en articles industriels, il sera nécessaire de les vulcaniser en les soumettant, pendant une durée de préférence comprise entre 3 et 40 minutes, à une température de préférence comprise entre 160° et 200 °C, la mise en forme desdits articles industriels intervenant préalablement ou simultanément à cette phase de vulcanisation.

Les compositions vulcanisées obtenues selon la présente invention présentent des caractéristiques satisfaisantes dans les domaines suivants :

— dureté Shore A au moins égale à 80.

— propriétés dynamométriques (résistance et allongement à la rupture) avant et après vieillissement.

— comportement élastique après écrasement (déformation rémanente à la compression).

— stabilité dimensionnelle (retrait à température élevée).

— adhérence sur métaux.

Cet ensemble de caractéristiques favorables permet de transformer les compositions selon l'invention en articles industriels ayant des usages variés, tels que notamment des joints d'étanchéité pour les industries de l'automobile (pare-brise) et de l'électroménager (portes de réfrigérateurs), durites, courroies, etc. De tels articles sont obtenus par recours à des techniques de transformation bien connues de l'homme de l'art telles que la fabrication de profilés par extrusion, le moulage sous presse, etc.

Les exemples ci-après sont donnés à titre illustratif et non limitatif de la présente invention.


Exemples 1 et 2


On prépare, par mélange à une température de 110 °C dans un mélangeur interne à cylindres, une composition homogène à partir des ingrédients figurant dans le tableau I ci-après, les quantités de ces ingrédients étant exprimées en parties en poids.

L'élastomère (a) est un terpolymère éthylène/propylène/5-éthylidène-2-norbornène commercialisé par la société ESSO sous la marque VISTALON® MD 83/1.

Le terpolymère (c) est un terpolymère éthylène/acrylate d'éthyle/anhydride maléique d'indice de fluidité (mesurée selon la norme ASTM D-1238) égal à 7 dg/min., contenant 6 % en poids d'acrylate d'éthyle et 3 % en poids d'anhydride maléique, commercialisée par la demanderesse sous la marque LOTADER LX 4110.

Le terpolymère (d) est un terpolymère éthylène/acrylate d'éthyle/anhydride maléique d'indice de fluidité (mesuré selon la norme ASTM D-1238) égal à 100 dg/min., contenant 18 % en poids d'acrylate d'éthyle et 4 % en poids d'anhydride maléique, commercialisé par la demanderesse sous la marque

0 204 790

LOTADER CR 6/15.

Le plastifiant (e) est un produit commercialisé sous la marque FLEXO® 876. L'activateur de vulcanisation (f) est de l'éthylphényldithiocarbamate de zinc. L'activateur de vulcanisation (g) est le cyclohexyl benzothiazylsulfonamide. L'activateur de vulcanisation (h) est le disulfure de tétraméthylthiurame. L'activateur de vulcanisation (i) est le diéthyldithiocarbamate de tellure.

Les compositions ainsi préparées sont ensuite vulcanisées sous presse à 180 °C pendant 10 minutes. Sur les compositions ainsi obtenues, on mesure :

— la dureté Shore A initiale $D_0$ à 20 °C, conformément à la norme ASTM D 2240.

— la résistance initiale à la rupture $RR_0$, conformément à la norme ASTM D-638, exprimée en kg/cm².

— l'allongement initial à la rupture $AR_0$, conformément à la norme ASTM D-638, exprimé en pourcent.

— la dureté Shore A (désignée $D_1$) et la résistance à la rupture $RR_1$, exprimées conformément aux mêmes normes et mesurées après 7 jours de vieillissement accéléré à 100 °C dans l'air en étuve à air renouvelé, selon la norme NFT 46.004.

— la dureté Shore A (désignée $D_2$) et la résistance à la rupture $RR_2$, exprimées conformément aux mêmes normes et mesurées après 7 jours de vieillissement accéléré dans l'eau à 100 °C.

— la déformation rémanente à la compression à froid $DRC_{20}$, conformément à la norme ASTM D-395 (méthode B), mesurée après un écrasement de 10 % à 20 °C.

— la déformation rémanente à la compression à chaud $DRC_{70}$, conformément à la même norme, mesurée après un écrasement de 25 % à 70 °C.

— la stabilité dimensionnelle SD, exprimée comme la variation de longueur (en pourcent), après 30 minutes à 170 °C, d'un barreau de dimensions $10 \times 10 \times 200$ mm découpé sur une plaque vulcanisée pendant 10 minutes à 180 °C.

— le rebond Zwick RZ à —30 °C, mesuré conformément à la norme ISO 4662 et exprimé en pourcent.

Les résultats chiffrés de ces différentes mesures figurent au tableau II ci-après.

### Exemples 3 et 4

On prépare, par mélange à une température portée progressivement de 80 °C à 130 °C (150 °C pour l'exemple 3) dans un mélangeur interne à cylindres, une composition homogène à partir des ingrédients figurant dans le tableau I ci-après, les quantités de ces ingrédients étant exprimées en parties en poids.

L'élastomère (b) est un terpolymère éthylène/propylène/5-éthylidène-2-norbornène commercialisé par la société ESSO sous la marque VISTALON® 7000.

La résine (j) est une résine butadiène-styrène commercialisée par la société SHELL CHIMIE sous la marque CARIFLEX® SP 145. La résine (k) est une résine novolaque additionnée d'hexaméthylène tétramine commercialisée par la société ROUSSELOT sous la dénomination R 7551.

Les compositions sont ensuite vulcanisées sous presse à 180 °C pendant 10 minutes. Sur les compositions ainsi obtenues on mesure les mêmes propriétés que précédemment. Les résultats chiffrés de ces mesures figurent au tableau II ci-après.

### Tableau I

| EXEMPLE | 1 | 2 | 3 | 4 |
|---|---|---|---|---|
| élastomère (a) | 90 | 60 | 0 | 80 |
| élastomère (b) | 0 | 0 | 80 | 0 |
| terpolymère (c) | 10 | 40 | 0 | 30 |
| terpolymère (d) | 7,5 | 30 | 20 | 0 |
| ZnO | 5 | 5 | 5 | 5 |
| acide stéarique | 1 | 1 | 1 | 1 |
| noir de carbone | 100 | 100 | 100 | 100 |
| plastifiant (e) | 22,5 | 0 | 0 | 0 |
| activateur (f) | 2 | 2 | 2 | 2 |
| activateur (g) | 1,5 | 1,5 | 1,5 | 1,5 |
| activateur (h) | 0,4 | 0,4 | 0,4 | 0,4 |
| activateur (i) | 0,4 | 0,4 | 0,4 | 0,4 |

4

# 0 204 790

Tableau I (Suite)

| EXEMPLE | 1 | 2 | 3 | 4 |
|---|---|---|---|---|
| soufre | 1,5 | 1,5 | 1,5 | 1,5 |
| résine (j) | 0 | 0 | 20 | 0 |
| résine (k) | 0 | 0 | 0 | 15 |

Tableau II

| EXEMPLE | 1 | 2 | 3 | 4 |
|---|---|---|---|---|
| $D_0$ | 80 | 95 | 97 | 97 |
| $RR_0$ | 137 | 150 | 136 | 138 |
| $AR_0$ | 230 | 165 | 250 | 190 |
| $D_1$ | 85 | 95 | 98 | 97 |
| $RR_1$ | 139 | 195 | 149 | 150 |
| $D_2$ | 81 | 95 | 97 | - |
| $RR_2$ | 152 | 181 | 145 | - |
| $DRC_{20}$ | 18 | 40 | 71 | 36 |
| $DRC_{70}$ | 30 | 53 | 46 | 44 |
| SD | 0 | 0 | 0,17 | 0,25 |
| RZ | 15 | 27,5 | 34 | 27 |

**Revendications**

1. Compositions comprenant au moins un élastomère polyoléfinique insaturé, au moins un agent de vulcanisation et au moins un activateur de vulcanisation dudit élastomère, caractérisées en ce qu'elles comprennent en outre au moins un terpolymère (A) comprenant des motifs dérivés dè l'éthylène, des motifs dérivés de l'anhydride maléique et des motifs dérivés d'au moins un ester de l'acide acrylique ou méthacrylique.

2. Compositions selon la revendication 1, caractérisées en ce que l'élastomère polyoléfinique insaturé est un terpolymère (B) d'éthylène avec au moins une $\alpha$-oléfine ayant de 3 à 6 atomes de carbone et au moins un diène.

3. Compositions selon l'une des revendications 1 et 2, caractérisées en ce que le terpolymère (A) comprend :

— de 87 à 98,7 % en moles dérivés de l'éthylène,

— de 1 à 10 % en moles de motifs dérivés d'un ester choisi parmi les acrylates et méthacrylates d'alkyle, ledit groupe alkyle ayant de 1 à 6 atomes de carbone, et

— de 0,3 à 3 % en moles de dérivés de l'anhydride maléique, et possède un indice de fluidité compris entre 3 et 200 dg/min.

4. Compositions selon l'une des revendications 1 à 3, caractérisées en ce qu'elles comprennent en outre une charge renforçante.

5. Compositions selon la revendication 4, caractérisées en ce que la charge renforçante est le noir de carbone.

6. Compositions selon l'une des revendications 4 et 5, caractérisées en ce que la charge renforçante est présente en quantité comprise entre 10 et 120 % en poids par rapport au poids de la phase polymère.

7. Compositions selon l'une des revendications 1 à 6, caractérisées en ce qu'elles comprennent en outre au moins un pigment organique et/ou une charge minérale.

8. Compositions selon la revendication 7, caractérisées en ce que ladite charge minérale est l'oxyde de zinc.

5

9. Compositions selon l'une des revendications 7 et 8, caractérisées en ce que ledit pigment organique et/ou ladite charge minérale est présent en quantité au plus égale à 5 % en poids par rapport au poids de la phase polymère.

10. Compositions selon l'une des revendications 1 à 9, caractérisées en ce qu'elles comprennent en outre au moins un plastifiant de l'élastomère polyoléfinique insaturé.

11. Compositions selon la revendication 10, caractérisées en ce que ledit plastifiant est présent en quantité au plus égale à 30 % en poids par rapport au poids de la phase polymère.

12. Procédé de fabrication d'une composition selon la revendication 1, caractérisé en ce que l'élastomère polyoléfinique insaturé, l'agent de vulcanisation, l'activateur de vulcanisation et le terpolymère sont mélangés à une température comprise entre 70 °C et 150 °C pendant une durée suffisante pour obtenir l'homogénéisation du mélange.

13. Procédé selon la revendication 12, caractérisé en ce que, en vue de sa vulcanisation, la composition est soumise, pendant une durée de 3 à 4 minutes, à une température comprise entre 160 °C et 200 °C.

14. Articles obtenus par vulcanisation et mise en forme de compositions selon l'une des revendications 1 à 11.


## Claims

1. Compositions comprising at least one unsaturated polyolefin elastomer, at least one vulcanizing agent and at least one vulcanization activator for the said elastomer, which are characterized in that they additionally comprise at least one terpolymer (A) containing repeat units derived from ethylene, repeat units derived from maleic anhydride and repeat units derived from at least one ester of acrylic or methacrylic acid.

2. Compositions according to Claim 1, characterized in that the unsaturated polyolefin elastomer is a terpolymer (B) of ethylene with at least one α-olefin containing from 3 to 6 carbon atoms and at least one diene.

3. Compositions according to either of Claims 1 and 2, characterized in that the terpolymer (A) comprises : from 87 to 98.7 % on a molar basis of repeat units derived from ethylene,

from 1 to 10 % on a molar basis of repeat units derived from an ester chosen from alkyl acrylates and methacrylates, the said alkyl group containing from 1 to 6 carbon atoms, and

from 0.3 to 3 % on a molar basis of repeat units derived from maleic anhydride,

and has a melt index of between 3 and 200 dg/min.

4. Compositions according to one of Claims 1 to 3, characterized in that they additionally comprise a reinforcing filler.

5. Compositions according to Claim 4, characterized in that the reinforcing filler is carbon black.

6. Compositions according to either of Claims 4 and 5, characterized in that the reinforcing filler is present in a quantity of between 10 and 120 % by weight based on the weight of the polymer phase.

7. Compositions according to one of Claims 1 to 6, characterized in that they additionally comprise at least one organic pigment and/or an inorganic filler.

8. Compositions according to Claim 7, characterized in that the said inorganic filler is zinc oxide.

9. Compositions according to either of Claims 7 and 8, characterized in that the said organic pigment and/or the said inorganic filler is present in a quantity not exceeding 5 % by weight based on the weight of the polymer phase.

10. Compositions according to one of Claims 1 to 9, characterized in that they additionally comprise at least one plasticizer for the unsaturated polyolefin elastomer.

11. Compositions according to Claim 10, characterized in that the said plasticizer is present in a quantity not exceeding 30 % by weight based on the weight of the polymer phase.

12. Process for the manufacture of a composition according to Claim 1, characterized in that the unsaturated polyolefin elastomer, the vulcanizing agent, the vulcanization activator and the terpolymer are mixed at a temperature of between 70 °C and 150 °C for a sufficient time to produce homogenization of the mixture.

13. Process according to Claim 12, characterized in that, in order to be vulcanized, the composition is subjected to a temperature of between 160 °C and 200 °C for a period of 3 to 4 minutes.

14. Articles obtained by vulcanizing and shaping compositions according to one of Claims 1 to 11.


## Patentansprüche

1. Zusammensetzungen enthaltend mindestens ein ungesättigtes Polyolefin-Elastomer, mindestens ein Vulkanisationsmittel und mindestens einen Aktivator für die Vulkanisation des Elastomers, dadurch gekennzeichnet, daß sie weiters mindestens ein Terpolymer (A) enthalten, das von Äthylen abstammende Einheiten, von Maleinsäureanhydrid abstammende Einheiten und von mindestens einem Acrylsäure- oder Methacrylsäureester abstammende Einheiten enthält.

2. Zusammensetzungen nach Anspruch 1, dadurch gekennzeichnet, daß das ungesättigte Polyolefin-Elastomer ein Terpolymer (B) von Äthylen, mindestens einem α-Olefin mit 3 bis 6 Kohlenstoffatomen und mindestens einem Dien ist.

3. Zusammensetzungen nach Anspruch 1 oder 2, dadurch gekennzeichnet, daß das Terpolymer (A) enthält :
— 87 bis 98,7 Mol-% an Äthyleneinheiten,
— 1 bis 10 Mol-% an Einheiten eines Esters, der ausgewählt ist aus den Alkylacrylaten und -methacrylaten, wobei die genannte Alkylgruppe 1 bis 6 Kohlenstoffatome enthält,
— 0,3 bis 3 Mol-% an Maleinsäureanhydrideinheiten, und einen Fließindex zwischen 3 und 200 dg/min besitzt.

4. Zusammensetzungen nach einem der Ansprüche 1 bis 3, dadurch gekennzeichnet, daß sie weiters einen verstärkenden Füllstoff enthalten.

5. Zusammensetzungen nach Anspruch 4, dadurch gekennzeichnet, daß der verstärkende Füllstoff Ruß ist.

6. Zusammensetzungen nach Anspruch 4 oder 5, dadurch gekennzeichnet, daß der verstärkende Füllstoff in einer Menge von 10 bis 120 Gew.-% bezogen auf das Gewicht der Polymerphase, vorliegt.

7. Zusammensetzungen nach einem der Ansprüche 1 bis 6, dadurch gekennzeichnet, daß sie weiters mindestens ein organisches Pigment und/oder einen mineralischen Füllstoff enthalten.

8. Zusammensetzungen nach Anspruch 7, dadurch gekennzeichnet, daß der mineralische Füllstoff Zinkoxid ist.

9. Zusammensetzungen nach Anspruch 7 oder 8, dadurch gekennzeichnet, daß das organische Pigment und/oder der mineralische Füllstoff in einer Menge von höchstens 5 Gew.-% bezogen auf das Gewicht der Polymerphase vorliegt.

10. Zusammensetzungen nach einem der Ansprüche 1 bis 9, dadurch gekennzeichnet, daß sie weiters mindestens einen Weichmacher für das ungesättigte Polyolefin-Elastomer enthalten.

11. Zusammensetzungen nach Anspruch 10, dadurch gekennzeichnet, daß der Weichmacher in einer Menge von höchstens 30 Gew.-%, bezogen auf das Gewicht der Polymerphase vorliegt.

12. Verfahren zur Herstellung einer Zusammensetzung nach Anspruch 1, dadurch gekennzeichnet, daß das ungesättigte Polyolefin-Elastomer, das Vulkanisationsmittel, der Vulkanisationsaktiviator und das Terpolymer bei einer Temperatur zwischen 70 °C und 150 °C während einer für die Erzielung der Homogenisierung der Mischung ausreichenden Zeitdauer gemischt werden.

13. Verfahren nach Anspruch 12, dadurch gekennzeichnet, daß die Zusammensetzung im Hinblick auf ihre Vulkanisation 3 bis 4 Minuten lang einer Temperatur zwischen 160 °C und 200 °C ausgesetzt wird.

14. Gegenstände, die durch Vulkanisation und Formgebung von Zusammensetzungen nach einem der Ansprüche 1 bis 11 erhalten wurden.